# EUROPEAN PATENT APPLICATION

(11) **EP 4 184 408 A1**
(43) Date of publication of application: **24.05.2023**
(21) Application number: 21208797.7
(22) Date of filing: 17.11.2021
(51) Int. Cl.: G06Q 20/22, G06Q 20/38, G06Q 20/40

(54) **ACCOUNT LINKING INDEX STRUCTURE IN A NETWORK**

(71) Applicant: Mastercard International Incorporated, Purchase NY 10577 (US)
(72) Inventor: HAMDAN, Husham, Croydon, CR0 5BP (GB)
(74) Representative: Gill Jennings & Every LLP

(57) **Abstract**

A computer-implemented method is disclosed for constructing an index structure in a real-time payment network, comprising: identifying a first primary account number, PAN, from a first user account belonging to a user; creating a data record in the index structure for the user; adding first user account information to the data record, the first user account information comprising the first PAN; searching the network using the first PAN to identify one or more transactions to and/or from the first user account; identifying one or more accounts associated with the one or more transactions respectively; determining one or more additional user accounts from the one or more accounts, where the one or more additional user accounts belong to the user; and storing information associated with the first user account and the one or more additional user accounts to the data record.

## Description

### FIELD OF INVENTION

This invention relates generally to data monitoring and security, and specifically to the determination of a security threat in a network based on linked accounts within an index structure.

### BACKGROUND

Computer networks often experience a large volume of network events. For example, a payment network enabling transfer of electronic funds can experience hundreds of thousands, millions or even tens of millions of network events per day in the form of individual transactions that each comprise electronic message(s) transmitted over the network. On average, something of the order of one, ten, or one hundred network events per day are associated with a network security threat. It is very difficult to effectively police such a large volume of network events to accurately pick out the small fraction that have a high probability of being associated with a network security threat for further investigation.

Each network event that is flagged as potentially being associated with a security threat must be examined in greater detail to ascertain whether the network event is indeed associated with a security threat or is instead a false positive. It is therefore desirable to make the detection process as accurate as possible, as each network event that is flagged as possibly being associated with a security threat that turns out to be a false positive constitutes a waste of resources such as processor cycles, power and memory. Equally, each network event that is in fact associated with a security threat that is missed constitutes an undetected security breach, which is clearly undesirable.

Furthermore networks may involve multiple parties with many different connections between the entities in the network. When a security threat occurs it may be essential to determine which network entities have received the data associated with the security threat and from where it has originated.

This is particularly an issue in fraudulent activities as it will typically only be identified that a security threat or breach has occurred a period of time after the security threat actually took place. This means that in a short period of time the affected data may pass between numerous entities in the network. This makes it difficult to trace the path of the data has taken. Even in networks involving a small number of parties it can become difficult to trace the movement of the data from one entity to another.

Due to security and privacy concerns, payment networks retain as little data as possible. Personally identifiable information ("PII") associated with payment card account numbers or primary account numbers ("PAN"), such as accountholder date of birth, social security number, or even name, are often walled-off from payment networks in order to comply with applicable laws, privacy practices, security policies, etc. Thus, although an individual may be associated with several payment cards - and therefore several unique PANs - the payment network typically does not retain PII that would be necessary to cross-reference each of the PANs with the individual. As a result, an issuer of PAN "A" (e.g., a payment card) is not apprised of transactions initiated by the individual associated with PAN "A" when he or she uses PAN "B" (e.g., another payment card) issued by a separate issuer. As each PAN is unique - and the necessary Pll is not available - the payment network may be unable to cross-reference PAN "A" with PAN "B." At times, however, it may beneficial if the payment network were able to apprise the issuer of PAN "A" of certain details of transactions initiated by the individual using PAN "B." That is, it is difficult to pick out separate network events that are in fact associated with one another in that they relate to actions taken by a single user (e.g. a particular consumer). This information can be useful in detecting and possibly also preventing network events associated with security threats as it can allow a given entity such as an issuer to gain a better and more complete picture of typical or characteristic network behaviour on a user by user basis. With this more complete picture it can be easier to pick out network events that are a potential security risk as these tend to deviate from typical or characteristic network behaviour.

This principle can be seen in the financial context as follows. Most issuers implement processing rules that are designed to prevent transaction fraud. This is especially common with respect to out-of-state or out-of-country purchases (e.g., transactions originating from location "A" using a PAN associated with location "B," which may be out-of-state or in another country with respect to location "A"). In this case the typical or characteristic pattern of network events associated with the user is that approximately the same geographical location is associated with the point of origin of all of the network events. A network event associated with that user but having a different geographical location at its point of origin is a deviation from the usual network event pattern that may be an indication of a security threat.

While this works in principle, clearly the ability to identify outliers successfully depends on the ability to accurately define the network event pattern that constitutes 'normal' or characteristic behaviour.

Fraud prevention rules can operate based on detection of network events, and particularly detection of network events that are unusual or exceptional in some way. Such rules are beneficial to accountholders and issuers, but they can cause processing delays and unnecessary network traffic when they are applied in error. Considering the geographical location attribute of a network event, fraud prevention logic may be applied in error as follows. Assume an individual books travel accommodations for location "A" (e.g., a flight/train/bus ticket to location "A," a hotel at location "A," etc.) with PAN "A" issued by issuer "A." Once the individual arrives at location "A," he or she may then initiate a transaction using PAN "B" issued by issuer "B." Since issuer "B" was not apprised of the individual's travel to location "A" (e.g., the payment network may not have the necessary PII to cross-reference PAN "A" with PAN "B"), fraud prevention rules implemented by issuer "B" may unnecessarily cause processing delays and unnecessary network traffic for the payment network (e.g., blocking, delaying, or declining transactions that are falsely determined to be fraudulent). This may mean a delay in processing the transaction (e.g., transaction data for the transaction is stored at the payment network until issuer "B" determines whether the transaction is not fraudulent and should be approved or it is fraudulent and should be declined). This may also mean the transaction is immediately declined by issuer "B" (e.g., the payment network receives the transaction data, processes it, and soon thereafter receives a message indicative of a rejection by the merchant or acquirer bank). In the first scenario, the payment network may be burdened with storing the transaction data until such a time the transaction is approved or declined.

This may lead to excess and unnecessary memory usage as well as decreased bandwidth while issuer "B" is making its determination (e.g., payment network databases would be holding/storing transaction data for a transaction that is not actually fraudulent). In the second scenario, the payment network may be burdened by the need to process a second, identical transaction at a later time (e.g., after the individual contacts issuer "B" and informs them of the travel). This causes excess network traffic and dedication of resources at the payment network (e.g., the second transaction only occurs due to the first transaction falsely determined to be fraudulent). This error essentially occurred because issuer "B" did not have sufficient information to build a complete picture of the network events associated with the individual.

In known security monitoring processes in a payment network scheme, threat detection is based on PAN associated with a payment card. For example, when a card is used to perform a transaction, the transaction is checked to determine if it fits with the transaction behaviour associated with the payment card. If the transaction fits with the expected behaviour, it is approved by an issuer on-behalf service or an authorisation request is sent to the issuer with a transaction score to indicate that the transaction is unlikely to be fraudulent. However if the transaction is deemed unusual, the transaction is either declined by the issuer on-behalf service, or an authorisation request is sent to the issuer with a transaction score that indicates that the transaction could be fraudulent. In known e-commerce systems the authorisation request sent to the issuer may result in the issuer contacting a consumer or user, via a SMS message, or mobile banking app for example, to confirm whether they are performing the transaction.

A problem with the known techniques is that they focus only around a PAN and associated payment cards (i.e. a "PAN-centric" approach), such that transaction behaviour of a single user cannot be accurately or effectively monitored based on a single PAN/payment card. A single user often has multiple accounts and user activity is often distributed across the multiple accounts belonging to the user. A PAN-centric security threat detection process will have no, or limited, visibility across different accounts belonging to a same user, and therefore any transaction behaviour modelling techniques and/or scoring methods are restricted. That is, the network event pattern that characterises typical behaviour for the user is not well defined. Accordingly known security threat detection methods can often result in both false negatives (e.g. no security threat when there is a threat) and/or false positives (e.g. declining transactions when there is no threat).

The present invention aims to solve one or more of the problems mentioned above, and in particular may enable improved characterisation of typical user behaviour in terms of network events.

### SUMMARY OF THE INVENTION

In a first aspect of the invention there is provided a computer-implemented method for constructing an index structure in a real-time payment network, the method comprising: identifying a first primary account number, PAN, from a first user account belonging to a user; creating a data record in the index structure for the user; adding first user account information to the data record, the first user account information comprising the first PAN; searching the real-time payment network using the first PAN to identify one or more transactions to and/or from the first user account; identifying one or more accounts associated with the one or more transactions respectively; determining one or more additional user accounts from the one or more accounts, where the one or more additional user accounts belong to the user; and storing information associated with the first user account and the one or more additional user accounts to the data record.

In this way an index structure can be created which allows transactions relating to data records to be better searched in a real-time payment network. Creating a data record which includes multiple accounts that belong to a single user advantageously provides an index structure for transaction authorisation events and anomaly detection within the real-time payment network. The detection anomalies may be related data security risks or fraudulent activity in the network.

In order to avoid processing delays and unnecessary network traffic at payment networks when issuer fraud prevention rules are unnecessarily applied to payment card transactions, the present methods and systems leverage the intermediary nature of payment networks with index structure querying. As discussed above, payment networks avoid retaining PII that is associated with a PAN.

Preferably storing information associated with one or more additional user accounts to the data record comprises adding the respective PAN for each of the one or more additional user accounts to the data record.

Preferably the method further comprises: searching the index structure for the user; and outputting the data record of the user as a report.

Preferably the method further comprises: receiving an authorisation request for a new transaction; identifying at least one of the accounts in the new transaction as one of the user accounts in the data record belonging to the user; comparing information in the new transaction against the information of the respective identified user account stored in the data record; and based on the comparison, either: authorising the new transaction on behalf of an issuer server, or transmitting the authorisation request onto the issuer server.

In this way the method provides an improved issuer on-behalf service by verifying a transaction authorisation request against the data record in the index structure. In addition the method provides a more accurate transaction approval mechanism. The index structure allows user account data to be more efficiently retrieved, without necessarily requiring an authorisation request to be passed on to an issuer.

Preferably searching the index structure transaction is based on a PAN associated with a new transaction and/or identifying at least one of the accounts in the new transaction is based on the PAN associated with the new transaction. Preferably comparing the new transaction with the respective user account comprises determining a transaction score for the new transaction. It should be appreciated that the transaction score will be more accurate as a result of the present index structure, thereby providing a more effective issuer on-behalf transaction approval system.

Preferably the new transaction is authorised on behalf of the issuer server if the transaction score is equal to or greater than a predetermined value, and wherein the authorisation request is transmitted onto the issuer service if the transaction score is lower than the predetermined value.

Preferably the method further comprises: determining an originating user account from the first user account and the one or more additional user accounts; and updating the data record to identify the originating user account. In this way a data record in the index structure can be better arranged and searched.

Preferably the method further comprises: monitoring the originating account for one or more further transactions to or from the originating account; determining one or more first-degree user accounts from the transaction data of the one or more further transactions, wherein the one or more first-degree user accounts belong to the user; and adding information associated with the one or more first-degree user accounts to the data record, the information associated with the one or more first-degree user accounts comprising the respective PAN for each first-degree user account.

Preferably the method further comprises: monitoring the one or more first-degree user accounts to determine one or more second-degree user accounts belonging to the user; and adding information associated with the one or more second-degree user accounts to the data record, the information associated with the one or more second-degree user accounts comprising the respective PAN for each second-degree user account.

Preferably determining that one or more user accounts belong to the user comprises identifying an indicator in the one or more transactions. Preferably the indicator comprises one of: a flag to indicate that the transaction is between two accounts of a same user, a device identifier, or a token identifier.

In a second aspect there is provided a system for constructing an index structure in a real-time payment network, the system configured to: identify a first primary account number, PAN, from a first user account belonging to a user; create a data record in the index structure for the user; add first user account information to the data record, the first user account information comprising the first PAN; search the real-time payment network using the first PAN to identify one or more transactions to and/or from the first user account; identify one or more accounts associated with the one or more transactions respectively; determine one or more additional user accounts from the one or more accounts, where the one or more additional user accounts belong to the user; and store information associated with the first user account and the one or more additional user accounts to the data record.

According to a third aspect there is provided a non-transitory computer-readable storage medium storing instructions thereon which, when executed by a processor, cause the processor to perform a method for constructing an index structure in a real-time payment network, the method comprising: identifying a first primary account number, PAN, from a first user account belonging to a user; creating a data record in the index structure for the user; adding first user account information to the data record, the first user account information comprising the first PAN; searching the real-time payment network using the first PAN to identify one or more transactions to and/or from the first user account; identifying one or more accounts associated with the one or more transactions respectively; determining one or more additional user accounts from the one or more accounts, where the one or more additional user accounts belong to the user; and storing information associated with the first user account and the one or more additional user accounts to the data record.

### BRIEF DESCRIPTION OF THE DRAWINGS

Embodiments of the present invention are described below, by way of example only, with reference to the accompanying drawings, in which:
Figure 1 illustrates in schematic form multiple PANs associated to a single user according to the present invention;
Figure 2 illustrates in schematic form multiple accounts associated to a single user according to an embodiment;
Figure 3 illustrates in schematic form an index structure according to an embodiment;
Figure 4 illustrates in schematic form transaction history of a user in a data record in an index structure according to an embodiment;
Figure 5 is a schematic diagram of an index structure system capable of implementing the invention and in accordance with an embodiment of the invention.
Figure 6 is a flowchart illustrating a method for creating a data record in an index structure according to an embodiment;
Figure 7A is a flowchart illustrating a method for outputting a report according to an embodiment;
Figure 7B is a flowchart illustrating a method for authorising a transaction according to an embodiment;
Figure 8 is a flowchart illustrating a method for identifying an originating user account according to an embodiment; and
Figure 9 is a flowchart illustrating a method for monitoring a user account and adding information to a data record according to an embodiment;

### DETAILED DESCRIPTION OF EMBODIMENTS

As used herein, the followings terms have the following meanings:
A 'network event' is any discrete operation that occurs over a network. An electronic message authorising transfer of funds from a source account to a destination account is an example of a network event. Typically, network events are made up of one or more electronic messages communicated over the network. Network events have an origin and a destination. In the context of a payment network, typically the origin of a network event is a payment account from which a payment is to be made and the destination of a network event is a payment account that is to receive a payment. Network events may be referred to as 'transactions' in this specification.

A 'security threat', or network security threat is an event within a network which leads to an unauthorised access, altering or movement of data within the network. It can also be considered as a modification to the operation of the network made against the interests of a legitimate network operator or even a consumer/user, where such a modification is usually made without the knowledge and permission of the network operator. In the example of a consumer transaction, an issuer may be liable for a fraudulent act, or even the merchant if they are the originator of the transaction. An example of a security threat in the context of a financial network is a redirection, where an electronic message specifying a false target account is transmitted over the network to cause movement of funds to an inappropriate target account in an attempt to commit fraud.

The methods and systems provided herein improve the implementation of fraud prevention rules by payment card issuers. In addition, the present methods and systems prevent fraud in cases where money is moved from account to account (where no payment card is used). Therefore by identifying the cards and accounts belonging to a same consumer fraud detection is improved across account-to-account (A2A) transactions as well as card transactions.

It should be understood that PANs in the present disclosure may be associated with payment cards (i.e. payment card PAN) and/or bank accounts (i.e. account PAN). That is, the term 'PAN' as user herein refers to any unique identifier that represents a user's financial instrument (e.g. a 16 digit card number, or card PAN) or a user account (e.g. bank account number, or account PAN). The PANs may be associated with one or more different cards and/or accounts as will be explained with reference to the drawings below.

Payment networks may act as intermediaries between payment card issuers, which are typically associated with an issuer and merchant processing systems/banks. Payment networks receive transaction data from merchants (e.g., from a merchant point of sale system ("POS") and/or an acquirer bank associated with a merchant) and ensure that transactions associated with transaction data are appropriately processed and passed on to an issuer of a given payment card. Payment networks must therefore maintain data associated with each issuer, payment card account ("PAN") number, and acquirer/merchant.

In order to avoid processing delays, unnecessary network traffic at payment networks when issuer fraud prevention rules are unnecessarily applied to payment card transactions, or identifying security threats to a real-time network the present disclosure describes an index structure having individual data records corresponding to individual users of the network.

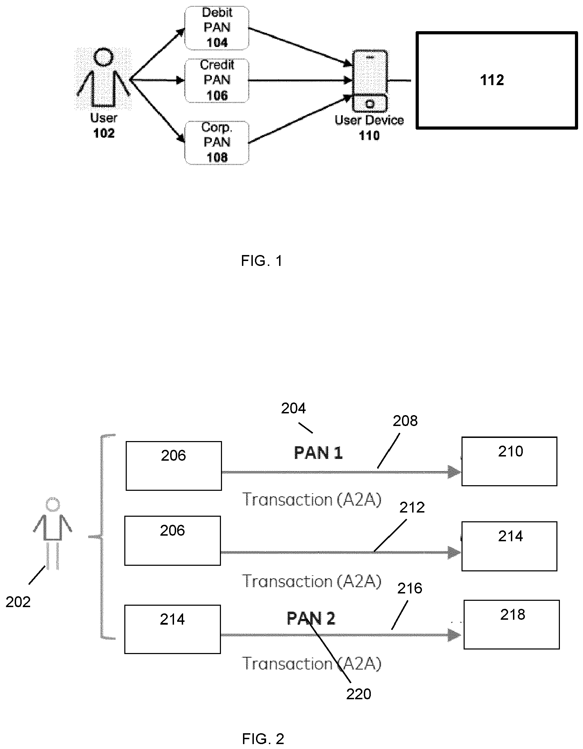

FIG. 1 shows a schematic of a user 102 having multiple payment card PANs, including a first debit card PAN 104, a second credit card PAN 106, and a third corporate card PAN 108. The corporate card may be a credit or debit card. The cards and PANs may be associated with one or more different accounts, for example, the first PAN 104 and second PAN 106 are associated with a first account, and the third PAN 108 is associated with a second account. In another example each PAN 104, 106, 108 is associated with different accounts. Yet in another example all three PANs are associated with a same account. The accounts may be bank accounts, a payment card account, or may be another type of internet-based account, for example.

Each of the three PANs can be stored on a user device 110 from which the user 102 can select which PAN to use for a transaction when paying with the user device 110. The user device 110 is further connected to a payment network 112, where the user device 110 sends provisioning data to the network 112. The provisioning data may include the first PAN 104, an associated expiration date and/or security code, and an identifier for the user device 110. The payment network 112 may store the provisioning data in a secure repository. The provisioning data may also include a device identifier may be a Mobile Station International Subscriber Directory Number ("MSISDN"), an International Mobile Equipment Identity ("IMEI") number for a user device 110, a wallet identifier for an electronic wallet or wallet mobile application, a Media Access Control ("MAC") address for a mobile device or other computing device, a serial number for a mobile device or other computing device, and the like.

FIG. 2 shows another schematic to identify that a user 202 has multiple accounts.

A first account PAN 204, associated with a first account 206, is identified from a first transaction 208 between a first account 206 and a second account 210. The first PAN 204 and the first account 206 are attributed to the user 202, and further transactions from the first account 206 are monitored to identify additional accounts belonging to the user 202. The second account 210 may also be monitored. A data record is created for the user 202 in an index structure for the network as will be explained in further detail below. The data record for the user 202 includes the first account PAN 204 and first account 206, and other information relating to the user 202 and the first PAN 204 and first account 206.

A second transaction 212 is monitored between the first account 206 and a third account 214. The second transaction 212 includes transaction data which indicates that the third account 214 belongs to the user 202. For example the transaction data may have a 'to-me' indicator, or have common location and/or device identifier data for the first and third accounts. The third account 214 is therefore attributed to the user 202 and data relating to the third account 214 is added to the data record for the user 202. The third account 214 has one or more PANs which are added to the data record for the user 202, if or when known.

The third account 214 is monitored, and when a third transaction 216 takes place from the third account 214 to a fourth account 218 the third account PAN 220, associated with the third account 214, is identified and added to the data record for the user 202.

As a result, the user data record includes two accounts 206, 214 and two PANs 204, 220 for the user 202. In addition the data record may include further information relating to transactions performed from the two accounts 206, 214, such as location data, user device information, transaction amounts, and merchant information.

The process depicted in Figure 2 can also be described as follows:
1. Identify a first PAN 204 belonging to a consumer or user 202 either available from services running on a payment network or via transactions received on the payment network.
2. Use the first PAN 204 to search for transactions on a corresponding account-to-account (A2A) network, or another real-time payment network, that contain the first PAN 204 as a reference. Such transactions contain the first PAN 204 when the consumer/user 202 performs an A2A transaction, to pay their credit card bill for example.
3. Once such transactions are identified, capture an originating bank account as an account belonging to the consumer 202.
4. Using the first account 206 (the account number or ID), monitor transactions to and/or from the first account 206 to identify other accounts belonging to the consumer 202 using transaction data. For example when a consumer transfers funds between accounts belonging to the same consumer.
5. For identified accounts belonging to the consumer/user 202, monitor such accounts to capture other accounts belonging to the same consumer 202.
6. For all identified accounts belonging to the same consumer 202, monitor all transactions to identify transactions that contain a PAN (e.g. a transaction to pay a credit card bill for other cards belonging to the consumer 202), and add the identified PANs to a list/data record for the consumer 202.
7. Once one or more of the consumer's accounts are identified directly from the first PAN 204 and other PANs are identified from A2A transactions, it is possible to then monitor the consumer's transactions (for example consumer/customer-to-business (C2B), consumer-to-consumer / customer-to-customer (C2C), peer-to-peer (P2P) ) to further identify the transaction behavior across the multiple accounts and identified PANs. This allows the creation of a consumer-centric fraud detection and transaction scoring technique, which is particularly important when consumers use A2A transactions to make purchases online or in-store.

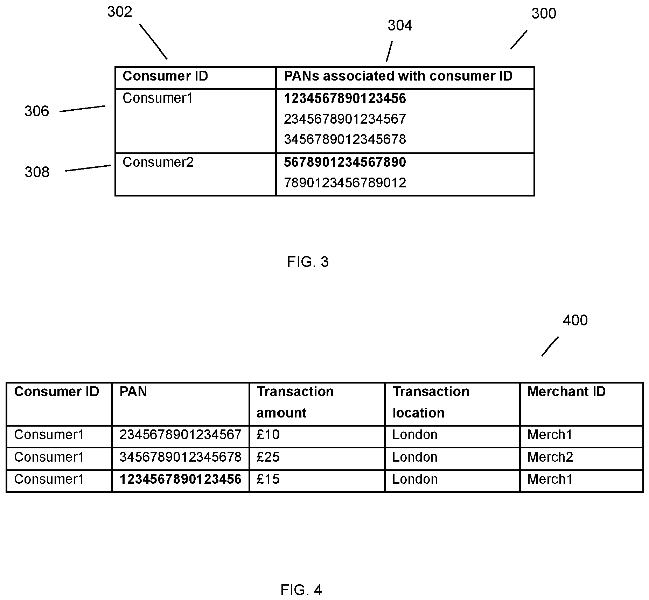

FIG. 3 shows a schematic index structure 300 for two different users in the network. From Figures 1 and 2 above, it should be understood that a single user, or consumer, may have multiple PANs associated with the user. Importantly it should be appreciated that a user/consumer may have multiple bank accounts and payment cards belonging to the same user, which means that there would be multiple PANs associated to payment cards and bank accounts associated with the same user.

Therefore the table in Figure 3 shows two data records of the index structure holding PAN information for users in the network, which allows a user to be monitored across multiple PANs and accounts belonging to the user. This allows greater visibility of a user's transaction behavior and for a more accurate transaction behavior picture/map to be constructed. It will be appreciated that the consumer IDs and PANs shown in Fig. 3 are purely illustrative and are not necessarily accurate representations of data that would be stored in these fields in a practical embodiment. Generally speaking, both the consumer ID and PAN will be an alphanumeric string, but the invention is not limited in this respect.

The index structure 300 has a first column 302 for consumer ID to identify a user, and a second column 304 for collating all PANs (and accounts) associated with a user. In Figure 3 there are two data records 306, 308 for two users, consumer 1 and consumer 2. There are three PANs associated with consumer 1, and two PANs associated with consumer 2. As a high level layer in the index structure 300, each data record 306, 308 may only include the associated PANs for a consumer ID. Further information relating to a consumer may be found in a respective data record, as shown in Figure 4.

Figure 4 shows a portion of a user's transaction history 400 in accordance with the invention. The information taken from a transaction shown in each row in Figure 4 is transaction data which is used to develop a transaction behavioural map for a user. These include, but are not limited to, transaction amounts relating to a PAN, the location where transactions take place, merchant IDs, device identifiers associated with electronic device(s) used to conduct the transaction, the date, time and/or day of the week that the transaction took place, etc. This list is not exhaustive and other information can additionally or alternatively be stored in transaction history 400 - for example, an identity of the good(s) and/or service(s) purchased in a given transaction. For bank account entries, the transaction history can also include names of consumers the consumer has engaged with financially e.g. did an A2A transfer. This helps map the consumer financial relationship to other consumers and to businesses which also makes it easier to identify fraud efficiently and reduce false positives.

A user's transaction history 400 can be obtained by searching a database containing transactions that have taken place over the payment network for all PANs and accounts associated with the user in index structure 300.

By storing and collecting transaction data across multiple PANs and accounts belonging to a same user, a more complete picture of a user's spending habits can be established. This can then be used in fraud detection by building a fraud profile for a user. For example, a user may typically spend no more than £50 at a supermarket with a certain card / PAN, so a transaction of £1,000 would constitute and outlier that may be indicative of fraud. Another example may be that one of a user's PANs is attempting transactions from a location that is different from the user's other PANs within a predetermined time period, e.g. multiple transactions with an identified user PAN are performed in London, England across a 12 hour time period, and another transaction from one of the user's other identified PANs is made in Rome, Italy within the same 12 hour time period.

The invention can improve on location-based fraud detection by preventing genuine transactions from being flagged as potentially fraudulent. This is because the invention can advantageously determine user movements from payments made with any of their payment card, not just a single card. For example, consider the scenario in which a user makes the following payments:
Payment 1: PAN 1 in London, England at 10am UTC.
Payment 2: PAN 2 in London, England at 11am UTC.
Payment 3: PAN 2 in Rome, Italy at 3pm UTC.
Payment 4: PAN 1 in Rome, Italy at 4pm UTC.

In these circumstances, examining the transaction history associated with PAN 1 only may cause a fraud alarm to be triggered as it may be considered unlikely that the user has moved from the UK to Italy within the time between payments 1 and 3. However, with the complete picture provided by the invention (i.e. information relating to PAN 2 as well), it can be considered far more likely that indeed the user has moved from the UK to Italy in this time as the probability of a bad actor obtaining two distinct PANs associated with the user and using both of them within one hour of each other in the same location (Rome) may be deemed relatively low.

In some cases the merchant location may be known to a greater degree of precision, e.g. it may be possible to determine that the merchant is located in an airport terminal, at a train station or at some other transport hub. If this information is available it can be taken into account when considering the likelihood of fraud occurring.

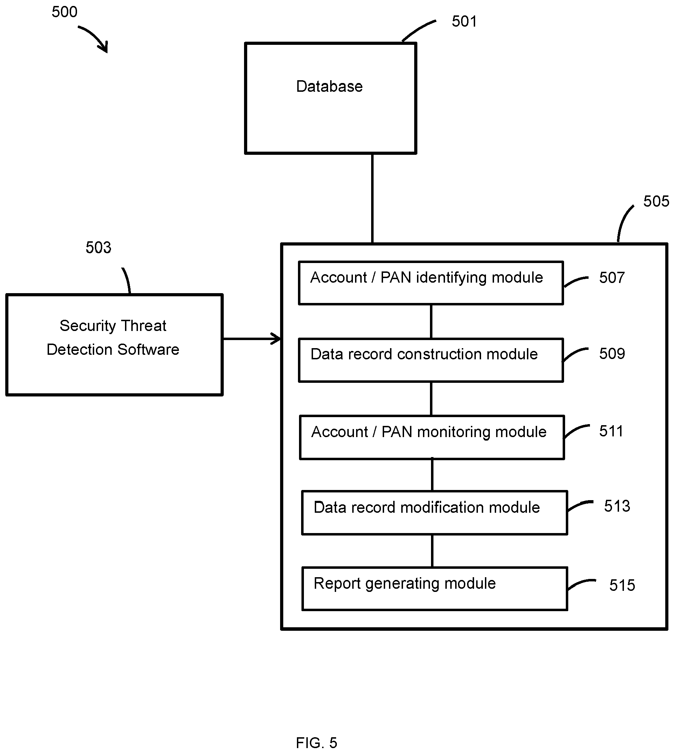

Figure 5 is a schematic diagram of a system 500 capable of implementing the invention and in accordance with an embodiment of the invention. The system 500 may be a part of the real-time network 112 in Figure 1.

The system 500 comprises data processing device 505 which includes a number of modules. These include account and/or PAN identifying module 507, data record construction module 509, account / PAN monitoring module 511 and data record modification module 513. Each of the modules may communicate with one another. Device 505 also includes a report generating module 515.

Data processing device 505 itself can be a single computer, a set of networked computers or some other distributed processing architecture. One or more virtual machines may be provided to implement the functionality of data processing device 505. Other suitable forms for data processing device 505 will be apparent to the skilled person having the benefit of the present disclosure.

Security threat detection software 503 includes computer-readable code that causes data processing device 505 to perform the methods as described in relation to Figures 2 and 5 to 9. Security threat detection software 503 may be executed on device 505. Each of the modules 507 to 515 may be responsible for executing a specific portion of the code.

Account and/or PAN identifying module 507 is responsible for obtaining account and PAN data associated with a transaction or network event. Account/PAN identifying module 507 can also identify network events that comprise PAN or account data associated with a network security threat. For example any accounts that are known to pose a network threat may be identified by module 507.

Data record construction module 509 is responsible for creating a data record in the index structure. A constructed data record may be stored a system database 501.

Account / PAN monitoring module 511 is responsible for monitoring selected and/or identified accounts and/or PANs in a real-time network. This may involve monitoring an account for transactions to and from the account, or in another example may monitor a PAN to determine accounts related to the PAN.

Data record modification module 513 is responsible for modifying and/or updating a data record using new transaction or account data may be included to the data record.

Report generating module 515 is responsible for outputting a report comprising details of an identified / selected user data record in the index structure. Report generating module 515 may also output a report associated with the security threat in the network.

Each of modules 507, 511 and 513 may be considered as a network detecting module. A network detecting module may operate by detecting network events such as transactions, or change requests or updates. Data record construction module 509 and data record modification module 513 are responsible for determining how data should be entered to the index structure.

Data associated with the data records and the index structure is stored in database 501. In some arrangements the data of the data records and the index structure may be stored in more than one database 501. For instance, each data record may have its own database 501. The data from the data records may be stored in the database 501 by any means that is known. The creation, addition or modification of a data record may also comprise data having a certain value and a time stamp associated with the data record action.

It will be appreciated that any of the methods described herein, and any particular step of said methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of a method may be implemented by different processors that are all collectively acting in accordance with computer-readable instructions stored on one or more storage media. The processor or processors may be component(s) of system 500, for example a processor of device 505.

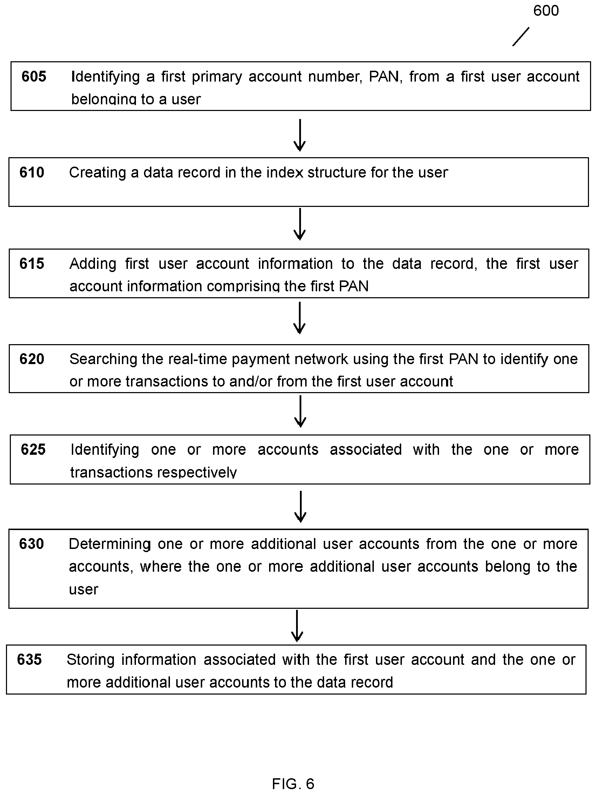

FIG. 6 sets out a method 600 for constructing a data record and an index structure in a real-time payment network according to an embodiment. The method 600 can be performed by the index structure system 500 of Figure 5.

In step 605 a first primary account number (PAN) is identified in a transaction that comes from a first account belonging to a user, i.e. a first user account. The transaction is between the first account and another account which may or may not belong to the user.

In step 610 the system 500 creates a data record for the user in an index structure in the system database. The data record may be labelled by an identification number for the user, and in step 615 the account number, or account ID, for the first account and the first PAN (i.e. information associated with the first user account) is added to the data record.

In step 620 the system 500 searches the network with the first PAN to identify further transactions including the first PAN. This may involve monitoring transactions to and/or from the first user account that occur in real-time in the network, or alternatively may involve searching through historical transaction records in the network database. It should therefore be understood that the method 600 can construct data records and an index structure using both historic and live/real-time transaction data.

From the identified transactions (which include the first PAN), the respective accounts associated with the identified transactions are identified in step 625, and any additional accounts belonging to the user are determined in step 630. As explained above the determination in step 630 may involve other data in the transaction data, such as a common device identifier to indicators in the transaction data from which a common user can be determined.

After one or more additional user accounts, belonging to the same user, are identified, information associated with the additional user accounts are stored in the data record in step 635. This information includes PANs associated with the additional user accounts and may also include the determination data used in step 630. Therefore it should be appreciated that this would link the first user account with the additional user accounts in the data record.

The data record of method 600 provides a record across all identified user accounts belonging to a user, from which a transaction behaviour for the user can be better modelled and thus also provide an improved fraud detection, or security threat detection, technique. This data record may be continually updated or modified based on new information retrieved from the real-time network.

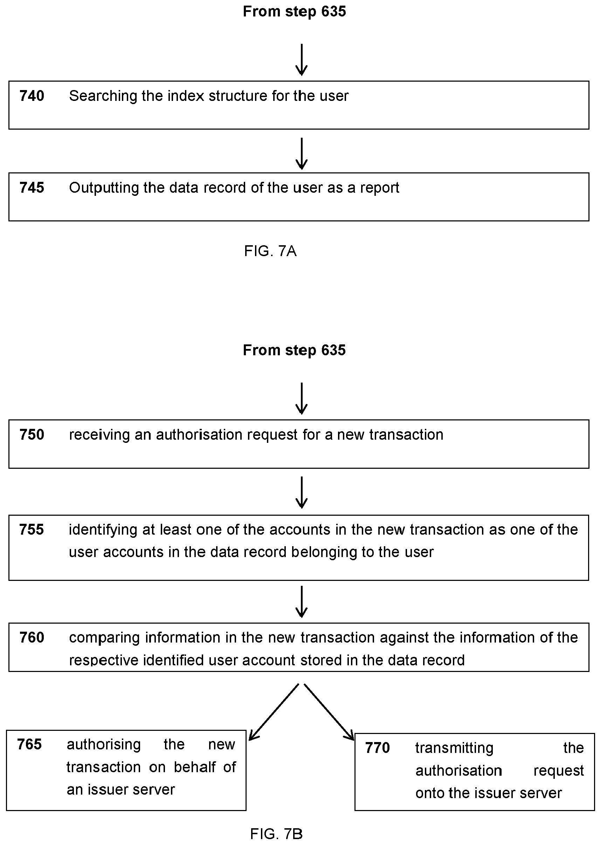

The method steps depicted in Fig. 7A follow step 635 from Fig. 6 and are performed by system 500 to search or query the index structure. In step 740 the index structure is searched/queried in order to find the data record for a particular user. The searching step may be performed by inputting a PAN, an account number / ID, a user ID, or a device identifier for example. The system will then search the index structure using the input data to identify the relevant data record.

This search request may be part of an authorisation request process, as will be explained in reference to Fig. 7B, or may be performed to output a report of the user data record in step 745. This report provides information on the user's transaction behaviour, such as any one or more of transaction history, common expenditures, merchants and locations. The report combines all of the user's identified accounts into a single report in order to provide a more representative user transaction behaviour, and the information in the report may be used further to calculate a transaction score for current or future transactions.

Fig. 7B shows another querying process of the index structure, where an authorisation request is received by the system in step 750. As explained above, the authorisation request may also be considered as a search request similar to step 740, where a data record for a user associated with the authorisation request for a new transaction is searched in the index structure database. Since the authorisation request in step 750 is associated with a new transaction, the transaction data in the request may be used to identify one of the user's accounts in order to locate the relevant data record in step 755. For example, the transaction data may include a PAN or an account ID. In an example, the user may be transferring funds between two accounts both belonging to the user. This means that two user accounts will be identified in step 755.

In step 760 information in the new transaction is compared against the stored information in the data record relating to the identified user account. For example the recipient in the new transaction may be compared with historical transaction records the data record to determine whether the recipient is a known or trusted recipient by the user. In another example the transaction amount or location may be compared against other amounts or locations of recent transactions performed by the user.

On determining whether to authorise the new transaction, the system either authorises the new transaction in step 765 on behalf of an issuer server or the system transmits the authorisation request onto the issuer server in step 770. Step 765 may be an optional feature that can be selected or deselected in the system, and all new transactions could be transmitted to an issuer server via the system, where the system can provide a transaction score based on the comparison between the information in the new transaction and stored information in the user data record.

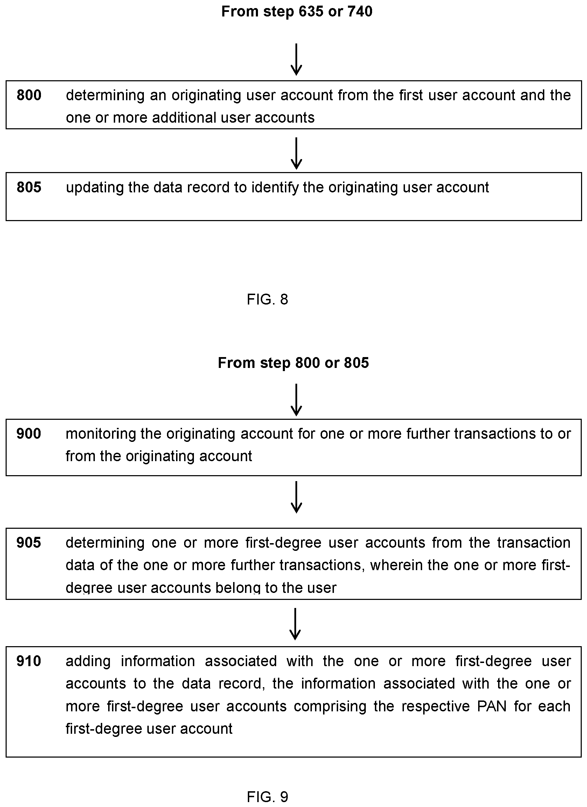

Figs. 8 and 9 show method steps for the system to determine an originating user account from the identified user accounts in the data record for a user. This may be performed to follow on from step 635 when multiple user accounts have been identified and stored in the data record, or alternatively it may be performed to include in the user data record report following step 740. In step 800 the originating user account is determined from a first user account and the one or more additional accounts identified to belong to the user from the method depicted in Figure 6. This may be as a result of tracing a user's multiple accounts and transactions to determine the originating account, for example via "to-me" indicators in the transactions to locate a source account. "To-me" indicators per se are known in the art.

In step 805, the data record is then updated so that the originating user account is identified. This means that a report generated from the data record provide a clearer picture of a user's transaction behaviour or transaction authorisations may be better controlled by the system.

After an originating account has been determined or identified, a user's data record can be further completed by monitoring the originating user account and following incoming and outgoing transactions from the originating account in step 900. This allows first-degree user accounts belonging to the user to be determined in step 905. In addition trusted transactions or network events detected from the originating account may also taken from step 900, and relevant user transaction behaviour information and user account information is added to the data record. The PANs of the identified first-degree user accounts will also be added to the data record, which allows the system to monitor the first-degree user accounts in order to determine further accounts that belong to the user, i.e. second or third degree user accounts from the originating user account.

It will be appreciated that the embodiments described herein are purely illustrative and hence are susceptible to many modifications, substitutions, additions and the like. All such modifications, substitutions and additions are within the scope of the invention which is defined by the appended claims. Method steps described in this specification may be implemented in any order, in parallel or sequentially, unless specifically stated otherwise.

## Claims

1. A computer-implemented method for constructing an index structure in a real-time payment network, the method comprising:
identifying a first primary account number, PAN, from a first user account belonging to a user;
creating a data record in the index structure for the user;
adding first user account information to the data record, the first user account information comprising the first PAN;
searching the real-time payment network using the first PAN to identify one or more transactions to and/or from the first user account;
identifying one or more accounts associated with the one or more transactions respectively;
determining one or more additional user accounts from the one or more accounts, where the one or more additional user accounts belong to the user; and
storing information associated with the first user account and the one or more additional user accounts to the data record.

2. The method of any of claim 1, wherein storing information associated with one or more additional user accounts to the data record comprises adding the respective PAN for each of the one or more additional user accounts to the data record.

3. The method of claims 1 or 2 further comprising:
searching the index structure for the user; and
outputting the data record of the user as a report.

4. The method of claims 1, 2 or 3 further comprising:
receiving an authorisation request for a new transaction;
identifying at least one of the accounts in the new transaction as one of the user accounts in the data record belonging to the user;
comparing information in the new transaction against the information of the respective identified user account stored in the data record; and
based on the comparison, either:
authorising the new transaction on behalf of an issuer server, or
transmitting the authorisation request onto the issuer server.

5. The method of claims 3 or 4, wherein searching the index structure transaction is based on a PAN associated with a new transaction and/or identifying at least one of the accounts in the new transaction is based on the PAN associated with the new transaction.

6. The method of claims 4 or 5, wherein comparing the new transaction with the respective user account comprises determining a transaction score for the new transaction.

7. The method of claim 6, wherein the new transaction is authorised on behalf of the issuer server if the transaction score is equal to or greater than a predetermined value, and wherein the authorisation request is transmitted on to the issuer service if the transaction score is lower than the predetermined value.

8. The method of any of the preceding claims further comprising:
determining an originating user account from the first user account and the one or more additional user accounts; and
updating the data record to identify the originating user account.

9. The method of claim 8 further comprising:
monitoring the originating account for one or more further transactions to or from the originating account;
determining one or more first-degree user accounts from the transaction data of the one or more further transactions, wherein the one or more first-degree user accounts belong to the user; and
adding information associated with the one or more first-degree user accounts to the data record, the information associated with the one or more first-degree user accounts comprising the respective PAN for each first-degree user account.

10. The method of claim 9 further comprising:
monitoring the one or more first-degree user accounts to determine one or more second-degree user accounts belonging to the user; and
adding information associated with the one or more second-degree user accounts to the data record, the information associated with the one or more second-degree user accounts comprising the respective PAN for each second-degree user account.

11. The method of any of the preceding claims, wherein determining that one or more user accounts belong to the user comprises identifying an indicator in the one or more transactions.

12. The method of claim 11, wherein the indicator comprises one of: a flag to indicate that the transaction is between two accounts of a same user, a device identifier, or a token identifier.

13. A system for constructing an index structure in a real-time payment network, the system configured to:
identify a first primary account number, PAN, from a first user account belonging to a user;
create a data record in the index structure for the user;
add first user account information to the data record, the first user account information comprising the first PAN;
search the real-time payment network using the first PAN to identify one or more transactions to and/or from the first user account;
identify one or more accounts associated with the one or more transactions respectively;
determine one or more additional user accounts from the one or more accounts, where the one or more additional user accounts belong to the user; and
store information associated with the first user account and the one or more additional user accounts to the data record.

14. The system of claim 13 further configured to perform the method of any of claims 2 to 12.

15. A non-transitory computer-readable storage medium storing instructions thereon which, when executed by a processor, cause the processor to perform a method for constructing an index structure in a real-time payment network, the method comprising:
identifying a first primary account number, PAN, from a first user account belonging to a user;
creating a data record in the index structure for the user;
adding first user account information to the data record, the first user account information comprising the first PAN;
searching the real-time payment network using the first PAN to identify one or more transactions to and/or from the first user account;
identifying one or more accounts associated with the one or more transactions respectively;
determining one or more additional user accounts from the one or more accounts, where the one or more additional user accounts belong to the user; and
storing information associated with the first user account and the one or more additional user accounts to the data record.
